Europäisches Patentamt

European Patent Office

Office européen des brevets

(19)

(11) **EP 0 735 916 B1**

(12) **EUROPÄISCHE PATENTSCHRIFT**

(45) Veröffentlichungstag und Bekanntmachung des Hinweises auf die Patenterteilung:
**19.01.2000   Patentblatt 2000/03**

(21) Anmeldenummer: **95932605.9**

(22) Anmeldetag: **10.10.1995**

(51) Int Cl.[7]: **B01D 61/14**

(86) Internationale Anmeldenummer:
**PCT/CH95/00229**

(87) Internationale Veröffentlichungsnummer:
**WO 96/12553 (02.05.1996 Gazette 1996/20)**

(54) **VERFAHREN UND VORRICHTUNG ZUM EINDICKEN VON FEST/FLÜSSIG-GEMISCHEN MITTELS MEMBRANTECHNOLOGIE**

PROCESS AND DEVICE FOR CONCENTRATING SOLID/LIQUID MIXTURES BY MEANS OF DIAPHRAGM TECHNOLOGY

PROCEDE ET DISPOSITIF PERMETTANT DE CONCENTRER DES MELANGES SOLIDES/LIQUIDES A L'AIDE DE LA TECHNOLOGIE DES MEMBRANES

(84) Benannte Vertragsstaaten:
**AT BE CH DE DK FR GB IT LI NL SE**
Benannte Erstreckungsstaaten:
**SI**

(30) Priorität: **25.10.1994   CH 318494**

(43) Veröffentlichungstag der Anmeldung:
**09.10.1996   Patentblatt 1996/41**

(73) Patentinhaber: **BUCHER-GUYER AG Maschinenfabrik CH-8166 Niederweningen (CH)**

(72) Erfinder: **HARTMANN, Eduard CH-5425 Schneisingen (CH)**

(56) Entgegenhaltungen:
**WO-A-94/01207          WO-A-95/15209
US-A- 4 988 445**

**Beschreibung**

Die Erfindung betrifft ein Verfahren zum Eindicken von Fest/Flüssig- Gemischen mittels Membrantechnologie unter Verwendung einer Anlage mit mehreren Gruppen von Membranmodulen mit Retentatkreislauf in Serie, sowie eine Vorrichtung zu dessen Durchführung.

Zur Zeit sind noch keine speziellen Anlagen für die Eindickung von Retentaten, welche bei der Ultrafiltration oder bei der Mikrofiltration entstehen, bekannt. Bei der Klärung von Fruchtsäften mittels solcher Filtrations-Technologien werden in den Retentat- Rückständen Eindickungs- Zustände von bis zu ca. 50 Vol.% Nasstrubanteil, gemessen im Zentrifugentest erreicht. D.h. diese Rückstände geben in der Zentrifuge noch mindestens 50 Vol.% Flüssigkeit ab. Solche Retentate sind noch fliessfähig und müssen für die Entsorgung noch speziell mittels Vakuum- Drehfiltern aufgearbeitet werden.

Vakuum- Drehfilter sind Anschwemmfilter und benötigen für die Filtration Kieselgur, welche beschafft und ebenfalls wieder entsorgt werden muss. Eine Entsorgung von Retentat über das Abwasser ist kaum mehr möglich, sodass Retentat eingedickt und auf eine Deponie geschüttet oder verbrannt werden muss. In beiden Fällen ist ein möglichst geringer Wasseranteil im Retentat wirtschaftlich sehr von Bedeutung. Für eine weitere Eindickung des Retentates über die genannten 50 Vol.% hinaus erscheinen nur speziell dafür ausgerüstete Membrananlagen zweckmässig. Ähnliche Problemstellungen treten auch in anderen Anwendungen der Membrantechnologie ausserhalb des Bereiches Fruchtsaft auf.

Aus JOURNAL OF FOOD SCIENCE, Volume 51, No. 3, 1986, Seiten 559-563 ist eine Anlage mit Metall- Membran-Ultrafiltration mit einfachem Durchgang zur verbesserten Apfelsaft- Ausbeute bekannt. Saft-Ausbeuten bis 85 % wurden damit erreicht, jedoch erscheinen solche Anlagen mit einfachem Durchgang für eine Eindickung von Retentaten in grösserem Umfange nicht zweckmässig.

Bekannte organische Membranen für Filtrationsanlagen, sowie für den Retentatkreislauf solcher Anlagen erforderliche Pumpen sind meistens nur für einen Betriebsdruck von maximal 6.5 bar ausgelegt. Auch sind mit einer üblichen einstufigen Radialpumpe kaum höhere Drücke erreichbar. Andererseits nimmt der Zeitbedarf für den gesamten Eindickungsvorgang proportional zur eingesetzten Membranoberfläche ab. Während dieses Eindickungsvorganges steigt aber die Viskosität des zirkulierenden Retentates zuerst langsam und gegen Ende schneller an.

Zum Eindicken auf hohe Nasstrubanteile bei geringem Zeitbedarf bietet sich eine Vergrösserung der eingesetzten Membranoberfläche an. Schaltet man demnach mehrere Gruppen bekannter Membranmodule parallel, so benötigt man unwirtschaftlich hohe Mengenleistungen für die Retentat-Umwälzpumpen. Schaltet man derartige Gruppen von Membranmodulen in Serie, so reichen bei den auftretenden hohen Viskositäten übliche Betriebsdrücke zum Betrieb nicht mehr aus.

Der Erfindung liegt deshalb die Aufgabe zugrunde, ein Verfahren zum Eindicken von Fest/Flüssig-Gemischen mittels Membrantechnologie und eine Vorrichtung zu dessen Durchführung anzugeben, welche bei beschränktem Bedarf an Betriebszeit einen hohen Nasstrubanteil des eingedickten Materiales erlauben.

Gemäss der Erfindung wird die Lösung dieser Aufgabe unter Verwendung einer Anlage mit mehreren Gruppen von Membranmodulen mit Retentatkreislauf in Serie dadurch erreicht, dass mit einer im Batch- Verfahren oder quasikontinuierlich betriebenen Membrananlage in einem ersten Schritt bei Betrieb aller Gruppen von Membranmodulen eingedickt wird, bis aufgrund des Eindickvorganges der Eindickungsgrad des Retentates einen ersten vorgegebenen Wert überschreitet, dass dann in einem zweiten Schritt im Verlauf des Eindickens aufeinanderfolgend mindestens eine Gruppe von Membranmodulen aus dem Retentatförderstrom ausgeschaltet und solange weiter eingedickt wird, bis ein zweiter Wert des Eindickungsgrades des Retentates erreicht ist und dass dann in einem dritten Schritt das eingedickte Retentat aus dem Kreislauf abgeführt wird.

Eine Vorrichtung zur Durchführung dieses Verfahrens zeichnet sich aus durch mindestens eine Gruppe von Membranmodulen, welche aus dem Retentatförderstrom aus- oder in denselben einschaltbar ist. Dabei ist es zweckmässig, dass eine Vermischeinrichtung im Retentatförderstrom vor der aus- oder einschaltbaren Gruppe von Membranmodulen angeordnet ist.

Weitere Merkmale und vorteilhafte Ausgestaltungen der Erfindung sind den Patentansprüchen zu entnehmen.

Ausführungsbeispiele der Erfindung sind in der folgenden Beschreibung und den Figuren der Zeichnung näher erläutert. Es zeigen:

Fig. 1 ein Schema einer erfindungsgemässen Eindickanlage mit drei Gruppen von Membranmodulen in Serie,

Fig. 2 ein Schema einer erfindungsgemässen Eindickanlage mit zwei Gruppen von Membranmodulen in Mehrpass- Ausführung,

Fig. 3 ein Schema einer Anordnung von Membranmodulen in einer erfindungsgemässen Eindickanlage gemäss Fig. 2,

Fig. 4 ein Schema einer Klappe für die Aus- oder Einschaltung einer Gruppe von Membranmodulen in einer Anlage gemäss einer der Fig. 1-3,

Fig. 5 ein Schema einer anderen Klappe für die Aus- oder Einschaltung einer Gruppe von Membranmodulen in einer Anlage gemäss einer der Fig. 1-3, und

Fig. 6 einen Querschnitt der Klappe gemäss Fig. 5 für die Aus- oder Einschaltung einer Gruppe von Membranmodulen in einer Anlage gemäss einer der Fig. 1-3.

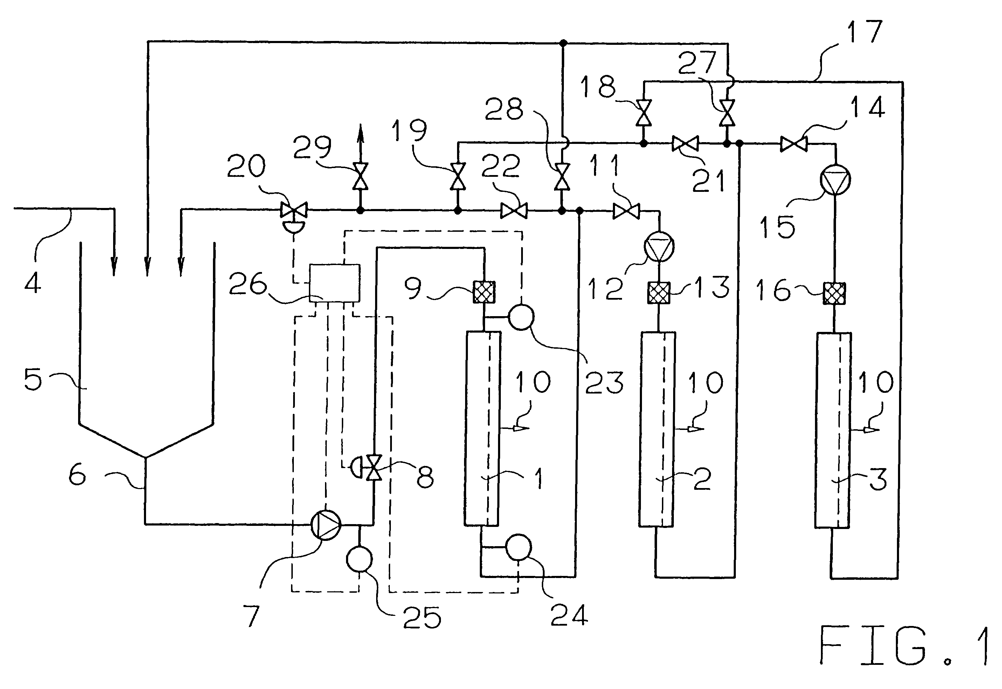

Ein Schema einer Eindickanlage gemäss Fig. 1 zeigt drei Gruppen von Membranmodulen 1, 2, 3 zum Eindicken von Fest/Flüssig- Gemischen durch Filtration. Die einzudickende Flüssigkeit gelangt über eine Zuführleitung 4 in einen Sammeltank 5. Vom Boden des Sammeltanks 5 führt eine Leitung 6 über eine Umwälzpumpe 7 mit steuerbarer Drehzahl und ein Servoventil 8, sowie einen statischen Vermischer 9 an den Eingang der ersten Gruppe 1 von Membranmodulen. Wie weiter unten noch genauer beschrieben, umfasst die Gruppe 1 eine Vielzahl von parallel und auch in Serie geschalteten Membranrohren, welche von der einzudickenden Flüssigkeit durchströmt werden.

Durch die als Filtrationsmembranen ausgebildeten Wände der Membranrohre werden die festen Anteile in der Flüssigkeit in einem Retentat zurückgehalten, während abzutrennende Flüssigkeit durch die Membranen hindurchfliesst und in, durch die Pfeile 10 symbolisierte Permeatleitungen gesammelt und abgeführt wird. Über eine Absperrklappe 11, eine weitere Umwälzpumpe 12 und einen weiteren statischen Vermischer 13 gelangt das Retentat aus der Gruppe 1 von Membranmodulen in die Retentatleitungen der Gruppe 2 von Membranmodulen. Von dort fliesst es über eine weitere Absperrklappe 14, eine Umwälzpumpe 15 und einen statischen Vermischer 16 in die Retentatleitungen der Gruppe 3 von Membranmodulen.

Die Gruppen 1, 2 und 3 haben alle den gleichen Aufbau und die gleiche Funktion, können sich aber in der Anzahl der Membranmodule unterscheiden. Aus der Gruppe 3 gelangt das Retentat über eine Leitung 17, zwei Absperrklappen 18, 19 und ein Servoventil 20 wieder in den Sammeltank 5 zurück, nachdem in den Permeatleitungen 10 abgeführte flüssige Anteile abgetrennt wurden.

Wie Fig. 1 zeigt, ist den Absperrklappen 14, 11 je eine weitere Absperrklappe 21, 22 zugeordnet. Durch schliessen der Klappe 14 und öffnen der Klappe 21 oder durch schliessen der Klappe 11 und öffnen der Klappe 22 können nun die Gruppen 3 oder 2 von Membranmodulen aus dem Retentat- Förderstrom ausgeschaltet werden. Zur Messung des Druckes im Retentatstrom sind am Eingang bzw. Ausgang der Gruppe 1 von Membranmodulen je ein Drucksensor 23 bzw. 24 vorgesehen, und der Durchfluss kann mit einem Durchflussmesser 25 am Ausgang der steuerbaren Umwälzpumpe 7 erfasst werden.

Die Signalleitungen der Sensoren 23, 24, 25 und die Steuerleitungen der Servoventile 8, 20 sind mit einer Regeleinrichtung 26 verbunden.

Im soweit beschriebenen Ausführungsbeispiel verläuft der Eindickvorgang nun wie folgt:

Gestartet wird mit den drei Gruppen 1, 2, 3 von Membranmodulen. Dazu sind die Klappen 11, 14, 18, 19 und das Servoventil 20 offen und die Klappen 22, 21 geschlossen. Die Regeleinrichtung 26 regelt über die Pumpe 7 mit steuerbarer Drehzahl gemäss dem Signal des Durchflussmessers 25 den Durchfluss auf 90 m3/h. Das Servoventil 20 wird dann soweit geschlossen, bis am Eingang der Gruppe 1 gemäss dem Signal des Sensors 23 ein Druck von 6 bar anliegt.

Das Retentat mit einem Nasstrubanteil von 30 % durchströmt die Gruppen 1, 2, 3 von Membranmodulen, wobei Permeat abgetrennt und über die Leitungen 10 abgeführt wird. Mit fortschreitender Betriebszeit nimmt der Nasstrubanteil und gleichzeitig die Viskosität im Retentatkreislauf zu. Das Druckgefälle über die Gruppen 1, 2, 3 vergrössert sich, und die Regeleinrichtung 26 öffnet das Servoventil 20 weiter, damit der vorgegebene Solldruck von 6 bar am Sensor 23 konstant gehalten und nicht überschritten wird.

Sobald das Servoventil 20 ganz geöffnet ist, steigt der Druck am Sensor 23 an. Erreicht derselbe 6.5 bar, so wird je nach Vorwahl in der Regeleinrichtung 26 entweder zur Begrenzung des Druckanstieges zuerst der Durchfluss durch Drehzahlreduktion der Umwälzpumpe 7 reduziert, oder sogleich ein Abschaltvorgang für die Gruppe 3 eingeleitet. Bei diesem Betriebszustand hat das Retentat im Kreislauf und im Sammelbehälter 5 einen Eindickungsgrad von etwa 60 % Nasstrubanteil erreicht. Das Abschalten von Gruppen von Membranmodulen ist zum Erreichen eines hohen Eindickungsgrades wesentlich wirksamer als eine Reduktion der Überströmgeschwindigkeit an den Membranen durch die genannte Reduzierung des Durchflusses. Die Retentatmassen zeigen meist ein stark strukturviskoses Verhalten. Eine Reduktion der Überströmgeschwindigkeit führt dann sogleich zu einem Viskositätsanstieg, und das Druckgefälle zwischen Ein- und Austritt der Gruppen nimmt daher nur gering ab.

Der weitere Eindickvorgang erfolgt nun nur noch mit den Gruppen 1 und 2. Dabei wird wie bereits beschrieben der Solldruck am Sensor 23 konstant gehalten, bis ein Abschaltvorgang für die Gruppe 2 erfolgt. Der Abschaltvorgang für die Gruppe 2 verläuft mit Vorteil so, dass das in die Gruppen 1, 2 zuströmende Retentat durch zusätzliche direkte Zufuhr von Wasser sogleich auf etwa 20 % Nasstrubanteil gebracht, oder durch zusätzliches Unterbrechen der Zufuhr aus dem Sammeltank 5 durch spülen mit nahezu Null Anteilen Nasstrub verdrängt wird.

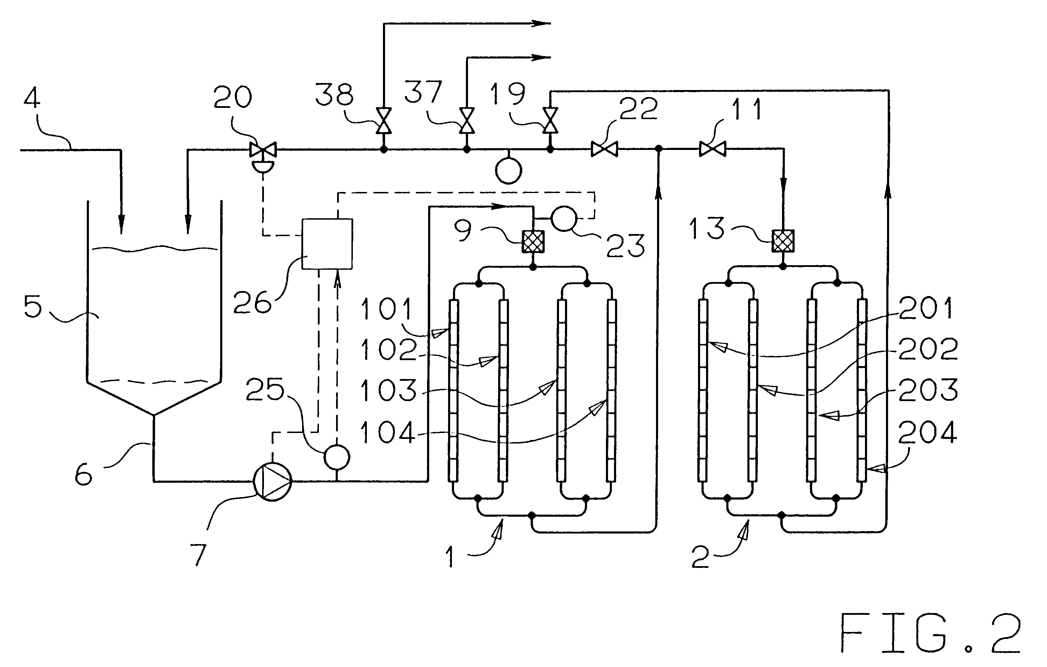

Dabei besteht die Gefahr, dass sich Ablagerungen mit erhöhten Nasstrubanteilen aus der Zone zwischen den Klappen 11, 22 verspätet lösen und einzelne Membranrohre in der Gruppe 2 von Membranmodulen verstopfen. Dies wird verhindert, indem das Retentat den der Gruppe 2 vorgeschalteten Vermischer 13 durchläuft, welcher wieder eine gleichmässige Verteilung der Trubanteile im Rohrquerschnitt erzeugt. Bei Mehrpassanlagen ist dem Vermischer 13 ein symmetrischer Rohrverteiler nachgeschaltet, wie ihn Fig. 2 zeigt. Das verdrängte Retentat wird dabei entweder über Klappen 27, 28 direkt zurück in den Sammeltank 5 geführt oder über eine Klappe 29 abgeleitet. Unmittelbar anschliessend wird die Klappe 22 geöffnet, und die Klappen 11, 19 werden geschlossen.

Der weitere Eindickvorgang erfolgt nun nur noch mit der Gruppe 1 von Membranmodulen. In der Regel besitzt Gruppe 1 die gleiche oder eine kleinere Anzahl von Membranmodulen pro Pass, wie Gruppe 2. Bei gleicher Viskosität des Retentates ist demnach der Druckabfall über die Gruppe 1 nur etwa halb so gross, wie jener bei Betrieb der Gruppen 1 und 2 zusammen.

Dank dieses geringeren Druckverlustes kann das Eindicken nun mit der Gruppe 1 allein weiter fortgesetzt werden. Die Mengen- und Druckregelung verläuft grundsätzlich gleich wie beim Betrieb mit den Gruppen 1 und 2 zusammen. Nachdem das Servoventil 20 bereits ganz geöffnet ist, wird bei konstantem Druck von 6.5 bar, gemessen mit dem Sensor 23, der Retentatförderstrom, gemessen am Durchflussmesser 25, auf etwa 45 m3/h reduziert. Das Retentat im Sammeltank 5 ist dann auf etwa 85 % Nasstrubanteile eingedickt. Dieses Retentat wird nun durch öffnen der Klappe 29 und schliessen des Servoventils 20 abgeleitet. Anschliessend erfolgt eine Rückverdünnung des in der Gruppe 1 verbliebenen Retentates, bevor die Gruppen 2 und 3 durch öffnen der Klappen 11, 14, 18, 19 und schliessen der Klappen 22, 21 wieder zugeschaltet werden.

Die Gefahr, dass sich Ablagerungen mit erhöhten Nasstrubanteilen aus der Zone zwischen den Klappen 11, 22 oder 14, 21 verspätet lösen und einzelne Membranrohre in den Gruppen 2 oder 3 von Membranmodulen verstopfen, wird vermindert durch eine Ausführung der Klappen gemäss den Fig. 4, 5 und 6. Das in Fig. 4 dargestellte Verzweigungsteil 40 umfasst die Klappen 11, 22, 28 gemäss Fig. 1. Dabei kommt der Retentatstrom von der Gruppe 1 durch einen Einlass 41 und läuft durch die offene Klappe 11 zur Gruppe 2, während sich vor der geschlossenen Klappe 22 in einer toten Zone 42 hochviskose Trubanteile absetzen. Diese Trubanteile werden zu passenden Zeitpunkten während des Eindickvorganges über die Klappe 28 in den Retentatkreislauf der Anlage zurückgeführt an einer Stelle, wo das Risiko einer Verstopfung von Membranmodulen gering ist.

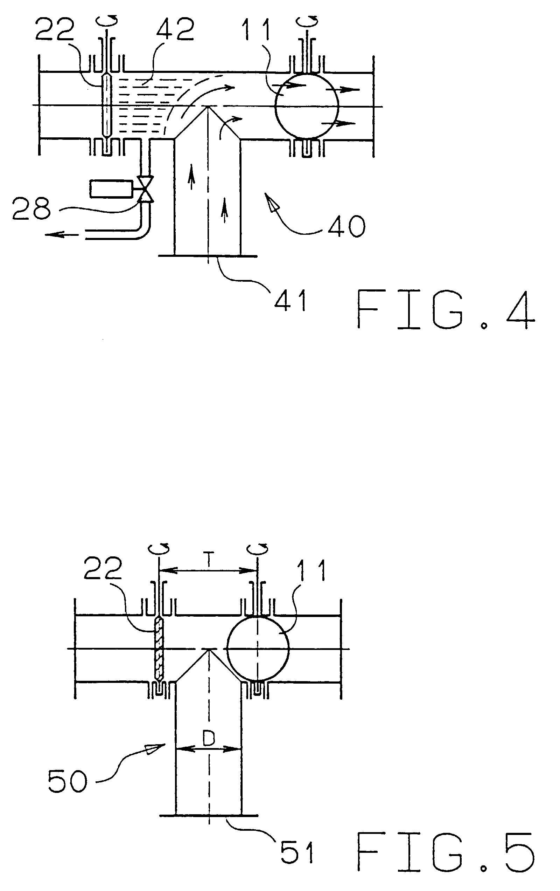

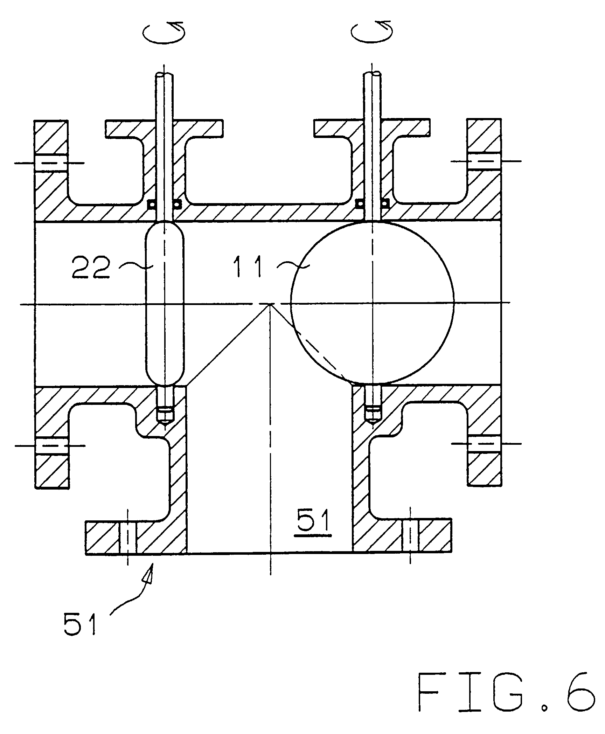

Die Ausführungsform der Klappen 11, 22 gemäss Fig. 5 umfasst ein Verzweigungsteil 50 mit einem Einlass 51. Dabei ist der Abstand T der Drehachsen der Klappen 11, 22 nur so wenig grösser als der Durchmesser D des Einlasses 51, vorzugsweise

$$T/D = 1.2 \text{ bis } 1.5,$$

dass keine tote Zone 42 der in Fig. 4 dargestellten Art auftritt. Fig. 6 zeigt einen Querschnitt des Verzweigungsteiles 50 gemäss Fig. 5.

In dem Schema einer erfindungsgemässen Eindickanlage gemäss Fig. 2 sind die der Fig. 1 entsprechenden Bauelemente mit den dort angegebenen Bezugszeichen versehen. Die Anlage gemäss Fig. 2 umfasst nur zwei Gruppen 1, 2 von Membranmodulen, deren Funktion bereits zu Fig. 1 beschrieben ist. Für die beim Abschaltvorgang der Gruppe 2 erfolgende Verdrängung des Retentates mit einem Eindickungsgrad von etwa 60 % aus der Gruppe 2 ist gemäss Fig. 2 eine Klappe 37 vorgesehen. Die Ableitung des Retentates nach dem Eindicken auf etwa 85 % Nasstrubanteile erfolgt gemäss Fig. 2 durch Öffnen einer Klappe 38 und Schliessen des Servoventiles 20.

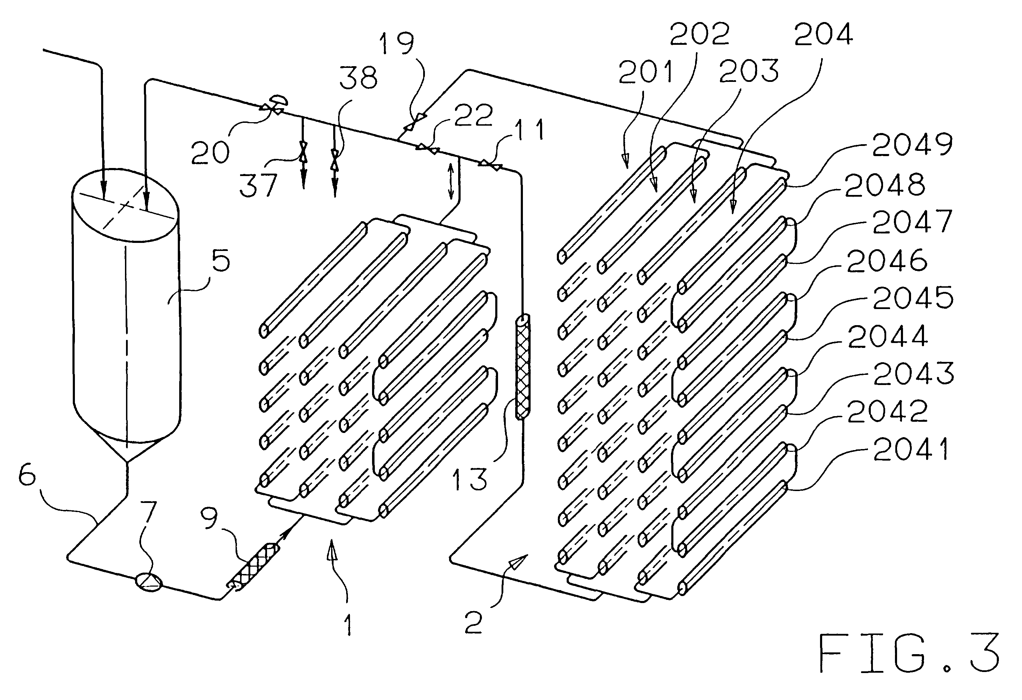

Die Fig. 2 zeigt die Gruppen 1, 2 von Membranmodulen in 4-Pass Ausführung. Die Gruppe 1 umfasst die parallel geschalteten Passe 101, 102, 103, 104, und die Gruppe 2 umfasst die parallel geschalteten Passe 201, 202, 203, 204. Jeder der Passe aus Gruppe 2 ist aus acht Membranmodulen in Serie aufgebaut, wie dies Fig. 3 genauer zeigt. Für beide Gruppen 1, 2 wird nur eine gemeinsame Umwälzpumpe 7 verwendet.

Fig. 3 zeigt schematisch die räumliche Anordnung der Membranmodule in einer Eindickanlage gemäss Fig. 2 bei einer alternativen Ausführung, welche in der Gruppe 1 in jedem Pass nur fünf, jedoch in Gruppe 2 neun Membranmodule in Serie umfasst. Die übrigen Bauelemente der Fig. 3 sind mit der Fig. 2 entsprechenden Bezugszeichen bezeichnet. Alle Membranmodule, von denen jene im Pass 204 mit 2041 bis 2049 bezeichnet sind, umfassen in der Regel ein Bündel von neunzehn parallel geschalteten Membranrohren der schon zu Fig. 1 erwähnten Art. Die Permeatleitungen 10 der Gruppen 1, 2 gemäss Fig. 1 sind in Fig. 3 nicht mit dargestellt.

Wie Fig. 3 zeigt, sind die Retentatleitungen für die einzelnen Passe 201 bis 204 in Gruppen hierarchisch zu je zwei zusammengeführt. Hierfür sind symmetrische Rohrverteiler eingesetzt, welche ebenfalls dazu dienen, die zusammengeführten Retentatleitungen am Eingang und Ausgang jeder Gruppe 1, 2 in eine einzige Leitung zusammenzuführen. An diesen gemeinsamen Einzelleitungen erfolgt die Ein- oder Ausschaltung der Gruppen 1, 2 von Membranmodulen.

Aus der obigen Beschreibung von Aufbau und Funktion erfindungsgemässer Anlagen gemäss Fig. 1 bis 3 sowie des Verfahrens zu deren Betrieb geht hervor, dass aufgabengemäss der Hauptzweck des Zu- oder Abschaltens von Gruppen von Membranmodulen eine Verbesserung der Gesamtleistung der Filtrationsanlage ist. Die Filtrationsleistung nimmt proportional zur Grösse der eingesetzten Membranoberfläche zu. Je nach Anwendungsfall beträgt der Zeitbedarf für den gesamten Eindickvorgang bis zu 20 Stunden. Während dieser Zeit steigt die Viskosität des zirkulierenden Retentates zuerst langsam und gegen Ende des Vorganges schneller an. Durch Zuschalten einer Gruppe 2 oder 3 von Membranmodulen im niederen Viskositätsbereich wird die momentane Filtrationsleistung meistens um einen Faktor zwei oder mehr verbessert.

**Patentansprüche**

1. Verfahren zum Eindicken von Fest/Flüssig- Gemischen mittels Membrantechnologie unter Verwendung einer Anlage mit mehreren Gruppen (1, 2, 3) von Membranmodulen mit Retentatkreislauf in Serie, dadurch **gekennzeichnet,** dass mit einer im Batch- Verfahren oder quasikontinuierlich betriebenen Membrananlage in einem ersten Schritt bei Betrieb aller Gruppen (1, 2, 3) von Membranmodulen eingedickt wird, bis aufgrund des Eindickvorganges der Eindickungsgrad des Retentates einen ersten vorgegebenen Wert überschreitet, dass dann in einem zweiten Schritt im Verlauf des Eindickens aufeinanderfolgend mindestens eine Gruppe (2, 3) von Membranmodulen aus dem Retentatförderstrom ausgeschaltet und solange weiter eingedickt wird, bis ein zweiter Wert des Eindickungsgrades des Retentates erreicht ist und dass dann in einem dritten Schritt das eingedickte Retentat aus dem Kreislauf abgeführt wird.

2. Verfahren nach Anspruch 1, dadurch **gekennzeichnet,** dass der Eindickungsgrad des Retentates durch Messung von dessen Druckabfall über mindestens eine Gruppe (1, 2, 3) von Membranmodulen erfasst wird.

3. Verfahren nach Anspruch 1, dadurch **gekennzeichnet,** dass der Eindickungsgrad des Retentates durch dessen Durchfluss im Retentatkreislauf bestimmt wird.

4. Verfahren nach Anspruch 1, **dadurch gekennzeichnet,** dass der Eindickungsgrad des Retentates durch Messung von dessen Viskosität bestimmt wird.

5. Verfahren nach Anspruch 1, dadurch **gekennzeichnet,** dass der Eindickungsgrad des Retentates durch Messung von dessen Trübung bestimmt wird.

6. Vorrichtung zum Eindicken von Fest/Flüssig- Gemischen mittels Membrantechnologie unter Verwendung einer Anlage mit mehreren Membranmodulen (1, 2, 3) mit Retentatkreislauf in Serie, **gekennzeichnet** durch mindestens eine Gruppe (2, 3) von Membranmodulen, welche aus dem Retentatförderstrom aus- oder in denselben einschaltbar ist.

7. Vorrichtung nach Anspruch 6, **gekennzeichnet** durch eine Vermischeinrichtung (9, 13), welche im Retentatförderstrom vor der aus- oder einschaltbaren Gruppe (2, 3) von Membranmodulen angeordnet ist.

8. Vorrichtung nach Anspruch 7, dadurch **gekennzeichnet,** dass die Vermischeinrichtung (9, 13) als statischer Vermischer ausgebildet ist.

9. Vorrichtung nach Anspruch 8, dadurch **gekennzeichnet,** dass die aus- oder einschaltbare Gruppe (2, 3) von Membranmodulen als Mehrpassgruppe ausgebildet ist, deren Ein- oder Ausschaltung an gemeinsamen Leitungen erfolgt, in welche die Retentatleitungen für die einzelnen Passe (101-104, 201-204) zusammengeführt sind.

10. Vorrichtung nach Anspruch 9, dadurch **gekennzeichnet,** dass die Retentatleitungen für die einzelnen Passe (101-104, 201-204) bei der Aufteilung und Zusammenführung an die gemeinsamen Leitungen in Gruppen mit Zweigen hierarchisch zu je zwei geordnet sind.

11. Vorrichtung nach Anspruch 6, **gekennzeichnet** durch Klappen (21, 22) für die Aus- oder Einschaltung der mindestens einen Gruppe (2, 3) von Membranmodulen, deren Anschlüsse mindestens eine mit zusätzlichen Schaltelementen (28) versehene Ablassöffnung aufweisen.

12. Vorrichtung nach Anspruch 11, dadurch **gekennzeichnet,** dass die Ablassöffnung direkt oder indirekt mit dem Retentatstrom in Verbindung steht.

13. Vorrichtung nach Anspruch 6, dadurch **gekennzeichnet,** dass in der Retentatzuführleitung der ein- oder ausschaltbaren Gruppe (2, 3) von Membranmodulen mindestens eine Umwälzpumpe (12, 15) eingeschaltet ist.

14. Vorrichtung nach Anspruch 6, dadurch **gekennzeichnet,** dass der Retentatkreislauf der Anlage eine Vorrichtung (26, 7, 8, 20) zur Regelung der Grösse des in demselben zirkulierenden Retentatstromes aufweist.

15. Vorrichtung nach Anspruch 14, dadurch **gekennzeichnet,** dass die Vorrichtung zur Regelung des Retentatstromes eine Retentatpumpe (7) mit regelbarer Drehzahl umfasst.

**Claims**

1. Process for concentrating solid/liquid mixtures by means of membrane technology using an installation with several groups (1, 2, 3) of membrane modules with a retentate circuit arranged in series, characterised in that, in the case of a discontinuously or quasi-continuously operating membrane installation, in a first step, concentration is effected operating all of the groups (1, 2, 3) of membrane modules until the degree of concentration of the retentate exceeds a first predetermined value as a result of the concentration process, that then, in a second step, in the course of the concentration, at least one group (2, 3) of membrane modules is successively disconnected from the retentate flow and concentration is continued until a second value of the degree of concentration of the retentate has been achieved and that then, in a third step, the concentrated retentate is discharged from the circuit.

2. Process according to claim 1, characterised in that the degree of concentration of the retentate is determined by measuring its drop in pressure over at least one group (1, 2, 3) of membrane modules.

3. Process according to claim 1, characterised in that the degree of concentration of the retentate is determined by its flow rate in the retentate circuit.

4. Process according to claim 1, characterised in that the degree of concentration of the retentate is determined by measuring its viscosity.

5. Process according to claim 1, characterised in that the degree of concentration of the retentate is determined by measuring its turbidity.

6. Device for concentrating solid/liquid mixtures by means of membrane technology using an installation with several membrane modules (1, 2, 3) with a retentate circuit arranged in series, characterised by at least one group (2, 3) of membrane modules which can be connected to or disconnected from the retentate flow.

7. Device according to claim 6, characterised by a mixing means (9, 13) arranged in the retentate flow upstream of the group (2, 3) of membrane modules which can be connected or disconnected.

8. Device according to claim 7, characterised in that the mixing means (9, 13) is in the form of a static mixer.

9. Device according to claim 8, characterised in that the group (2, 3) of membrane modules which can be connected or disconnected is in the form of a multi-pass group which is connected or disconnected along common lines in which the retentate lines for the individual passes (101-104, 201-204) are brought together.

10. Device according to claim 9, characterised in that the retentate lines for the individual passes (101-104, 201-204) are arranged hierarchically in pairs in groups with branches during the division and bringing together along the common lines.

11. Device according to claim 6, characterised by valves (21, 22) for the connection or disconnection of the at least one group (2, 3) of membrane modules, the connections of which have at least one discharge opening provided with additional switching elements (28).

12. Device according to claim 11, characterised in that the discharge opening is directly or indirectly connected to the retentate flow.

13. Device according to claim 6, characterised in that at least one circulating pump (12, 15) is inserted into the retentate supply line of the group (2, 3) of membrane modules which can be connected or disconnected.

14. Device according to claim 6, characterised in that the retentate circuit of the installation has a device (26, 7, 8, 20) for controlling the magnitude of the retentate flow circulating therein.

15. Device according to claim 14, characterised in that the device for controlling the retentate flow includes a retentate pump (7) with variable speed.

## Revendications

1. Procédé pour concentrer des mélanges solides-liquides à l'aide de la technologie des membranes, en utilisant une installation comportant plusieurs groupes (1, 2, 3) de modules à membranes avec circuit de rétentat en série, **caractérisé** en ce que, avec une installation à membranes exploitée en fonctionnement discontinu ou quasi-continu, on effectue, au cours d'une première étape, la concentration en exploitant tous les groupes (1, 2, 3) de modules à membranes jusqu'à ce que, du fait du processus de concentration, le degré de concentration du rétentat dépasse une première valeur prédéfinie, en ce qu'ensuite, au cours d'une deuxième étape, on exclut successivement au cours de la concentration au moins un groupe (2, 3) de modules à membranes du flux de circulation de rétentat, et on poursuit la concentration jusqu'à ce qu'une deuxième valeur du degré de concentration du rétentat soit atteinte, et en ce qu'enfin, au cours d'une troisième étape, on évacue du circuit le rétentat concentré.

2. Procédé selon la revendication 1, **caractérisé** en ce que le degré de concentration du rétentat est constaté en mesurant sa chute de pression en passant par un groupe (1, 2, 3) de modules à membranes.

3. Procédé selon la revendication 1, **caractérisé** en ce que le degré de concentration du rétentat est déterminé par son débit de passage dans le circuit de rétentat.

4. Procédé selon la revendication 1, **caractérisé** en ce que le degré de concentration du rétentat est déterminé en mesurant sa viscosité.

5. Procédé selon la revendication 1, **caractérisé** en ce que le degré de concentration du rétentat est déterminé en mesurant sa turbidité.

6. Dispositif pour concentrer des mélanges solides-liquides à l'aide de la technologie des membranes, en utilisant une installation comportant plusieurs groupes (1, 2, 3) de modules à membranes avec circuit de rétentat en série, **caractérisé** par au moins un groupe (2, 3) de modules à membranes, qui peut être exclu du flux de circulation de rétentat ou inclus dans ce flux.

7. Dispositif selon la revendication 6, **caractérisé** par un dispositif mélangeur (9, 13), qui est disposé dans le flux de circulation de rétentat avant le groupe (2, 3) de modules à membranes pouvant être exclu ou inclus.

8. Dispositif selon la revendication 7, **caractérisé** en ce que le dispositif mélangeur (9, 13) est réalisé sous forme de mélangeur statique.

9. Dispositif selon la revendication 8, **caractérisé** en ce que le groupe (2, 3) de modules à membranes pouvant être exclu ou inclus est conçu comme groupe à plusieurs passages, dont l'inclusion ou exclusion s'effectue sur des conduites communes dans lesquelles sont réunies les conduites de rétentat pour les passages individuels (101-102, 201-204).

10. Dispositif selon la revendication 9, **caractérisé** en ce que les conduites de rétentat pour les passages individuels (101-102, 201-204) sont, pour leur division et leur réunion sur les conduites communes, classées hiérarchiquement par groupes de deux à ramifications.

11. Dispositif selon la revendication 6, **caractérisé** par des clapets (21, 22) pour l'exclusion ou inclusion du ou des groupes (2, 3) de modules à membranes, dont les branchements présentent au moins une ouverture d'évacuation pourvue d'éléments de commutation supplémentaires (28).

12. Dispositif selon la revendication 11, **caractérisé** en ce que l'ouverture d'évacuation est reliée directement ou indirectement au flux de rétentat.

13. Dispositif selon la revendication 6, **caractérisé** en ce qu'au moins une pompe de circulation (12, 15) est montée dans la conduite d'alimentation en rétentat du groupe (2, 3) de modules à membranes pouvant être inclus ou exclu.

14. Dispositif selon la revendication 6, **caractérisé** en ce que le circuit de rétentat de l'installation présente un dispositif (26, 7, 8, 20) pour réguler le montant du flux de rétentat circulant dans ce circuit.

15. Dispositif selon la revendication 14, **caractérisé** en ce que le dispositif (26, 7, 8, 20) pour réguler le flux de rétentat comprend une pompe de rétentat (7) à vitesse de rotation réglable.

FIG. 1

FIG.2

EP 0 735 916 B1

FIG.3

FIG.4

FIG.5

22    11

51

51

# FIG.6